Europäisches Patentamt

European Patent Office

Office européen des brevets

(19)

(11) **EP 0 764 559 B1**

(12) **EUROPÄISCHE PATENTSCHRIFT**

(45) Veröffentlichungstag und Bekanntmachung des Hinweises auf die Patenterteilung:
**08.11.2000 Patentblatt 2000/45**

(51) Int Cl.$^7$: **B60Q 1/115**

(21) Anmeldenummer: **96113449.1**

(22) Anmeldetag: **22.08.1996**

(54) **Verfahren zur Eichung eines Systems zur Regelung der Leuchtweite von Kraftfahrzeugscheinwerfern**

Method for the calibration of a controlling device for vehicle light beam

Procédé de calibrage d'un dispositif de régulation de la portée des phares d'un véhicule

(84) Benannte Vertragsstaaten:
**AT DE ES FR GB IT SE**

(30) Priorität: **20.09.1995 DE 19534870**

(43) Veröffentlichungstag der Anmeldung:
**26.03.1997 Patentblatt 1997/13**

(73) Patentinhaber: **Hella KG Hueck & Co.**
**59552 Lippstadt (DE)**

(72) Erfinder:
- **Kasprzok, Ralf**
  **59558 Lippstadt (DE)**
- **Neumann, Andreas**
  **59555 Lippstadt (DE)**

(56) Entgegenhaltungen:
**EP-A- 0 470 395**   **EP-A- 0 470 401**

**Beschreibung**

Die Erfindung betrifft ein Verfahren zur Eichung eines Systems zur Regelung der Leuchtweite von Kraftfahrzeugscheinwerfern, bei dem Sollwertsignale zur Regelung der Leuchtweite basierend auf der Messung von Lagesignalen, die der Lage der Fahrzeugkarosserie zu der Straßenoberfläche entsprechen, erzeugt werden, Istwertsignale, die die Einstellung der lichtabstrahlenden Einrichtung des mindestens einen Scheinwerfers wiedergeben, gemessen werden, Regelwerte zur Ansteuerung einer Stelleinrichtung, die die Leuchtweite der lichtabstrahlenden Einrichtung ändert, durch Vergleichen der Sollwertsignale mit den Istwertsignalen, erzeugt werden und ein Korrekturwertsignal zur Eichung des Systems auf eine Grundeinstellung, die einer vorgegebenen Leuchtweite entspricht, eingestellt wird.

Entsprechend der gesetzlichen Regelungen, die zum Zweck haben, Blendungen des Gegenverkehrs und Sichtweiteverluste der Fahrer von Kraftfahrzeugen zu vermeiden, verfügt jeder Kraftfahrzeugscheinwerfer über Einstellelemente, mit denen die lichtabstrahlende Einrichtung des Kraftfahrzeugscheinwerfers auf eine Grundeinstellung justiert werden kann, bei der die Leuchtweite bzw. Lichtverteilung, die auf einer Meßwand erzeugt wird, den Vorschriften entspricht.

Die gesetzlichen Vorschriften treffen auch auf solche Kraftfahrzeugscheinwerfer zu, die mit manuell zu betätigenden Stelleinrichtungen ausgerüstet sind, um die Leuchtweite der Beladung des Kraftfahrzeuges anpassen zu können. Auch diese Kraftfahrzeugscheinwerfer weisen Justageeinrichtungen am Scheinwerfer zur Durchführung der Grundeinstellung entsprechend den Vorschriften auf.

Das gleiche trifft für solche Scheinwerfer zu, die über eine automatische Regeleinrichtung für die Leuchtweite verfügen, wie sie zum Beispiel aus der europäischen Patentschrift EP 0 355 539 B1 bekannt ist. Bei einem solchen Leuchtweiteregelsystem werden Sollwertsignale zur Regelung der Leuchtweite basierend auf der Messung von Lagesignalen, die der Lage der Fahrzeugkarosserie zu der Straßenoberfläche entsprechen, erzeugt. Zudem werden Istwertsignale gemessen, die die Einstellung der lichtabstrahlenden Einrichtung des mindestens einen Scheinwerfers wiedergeben. Durch den Vergleich der Sollwertsignale mit den Istwertsignalen werden Regelwerte zur Ansteuerung einer Stelleinrichtung, die die Leuchtweite der lichtabstrahlenden Einrichtung ändert, erzeugt. In Abhängigkeit der Sollwertsignale erfolgt somit die Regelung der Leuchtweite. Die Sollwertsignale können dabei durch verschiedenste Parameter beeinflußt werden.

Aus der europäischen Patentanmeldung EP 0 535 472 A2 ist eine solche Regeleinrichtung bekannt, die sowohl manuell als auch automatisch betätigt werden kann. Bei der Erzeugung der Istwertsignale, die mit den Sollwertsignalen durch die Regeleinrichtung verglichen werden sollen, ist zu Justagezwecken im Sinne der Erzeugung einer Grundeinstellung ein verstellbarer Widerstand vorgesehen, der das Istwertsignal um einen konstanten Wert je nach Einstellung verändert.

Aus der deutschen Offenlegungsschrift DE 40 19 690 A1 ist eine derartige Regeleinrichtung für die selbsttätige Leuchtweiteeinstellung bekannt, bei dem ein Korrekturwertsignal zur Justage der Regeleinrichtung als veränderbarer Widerstand im Bereich des Fahrzeugniveausensors, der zwischen Achse und Fahrzeugkarosserie angeordnet ist, durch manuelle Einstellung gebildet wird.

Die vorbekannten Regelsysteme weisen den Nachteil auf, daß neben der erforderlichen Justage der Leuchtweite jedes einzelnen Kraftfahrzeugscheinwerfers, die in der Regel manuell mit Hilfe von optischen Scheinwerfereinstellsystemen erfolgt, auch das elektrische Regelsystem, um eine Eichung und Justage des Gesamtsystems zu erreichen, gesondert manuell justiert werden muß. In dem einen Fall wird dabei der Sollwert des Fahrzeugniveaugebers direkt beeinflußt und in dem anderen Fall der Istwert der Einstellvorrichtung verändert. Da jede Stelleinrichtung, wie sie z. B. auch aus der EP 0 535 472 A2 bekannt ist, nur einen begrenzten Stellweg zur Verfügung stellt, wird sowohl durch Beeinflussung des Sollwertes als auch des Istwertes dieser Stellweg bei dem Vorliegen von großen Toleranzen derart eingeschränkt, daß der maximal erforderliche Stellweg in positiver oder negativer Richtung nicht mehr zur Verfügung steht.

Der Erfindung liegt daher die Aufgabe zugrunde, ein Verfahren zur Eichung eines Leuchtweiteregelsystem zu schaffen, das bei der Erstmontage sowie bei jeder Wartung und Reparatur eine einfache und kostengünstige Selbstjustage ermöglicht, die den maximalen Einstellbereich nicht einschränkt.

Die Aufgabe wird durch die Merkmale des Anspruchs 1 gelöst.

Bei der Eichung eines Systems zur Regelung der Leuchtweite von Kraftfahrzeugscheinwerfern weisen die Sensoren, die die Lage der Fahrzeugkarosserie zu der Straßenoberfläche messen, egal ob diese als elektromechanische Sensoren zwischen der Achse und der Fahrzeugkarosserie oder als optoelektronische Sensoren oder Ultraschallsensoren ausgebildet sind, die größten fahrzeugspezifischen bzw. bauteileabhängigen Toleranzen auf. Bei dem vorgeschlagenen Verfahren zur Eichung eines Systems zur Regelung der Leuchtweite von Kraftfahrzeugscheinwerfern erweist es sich dabei als besonders vorteilhaft, daß alle Parameter (Sollwert, Istwert, Regelwert) des Regelsystems auf die der Grundeinstellung des Regelsystems entsprechenden Werte voreingestellt werden. Durch die manuelle oder automatische Feinjustage der lichtabgebenden Einrichtung wird zudem ein möglichst exaktes Einhalten der Grundeinstellung gewährleistet. Als besonders vorteilhaft erweist es sich dabei, daß bei Aufschaltung des Lagesignals bei konstantem Sollwert, der der Grundeinstellung entspricht, ein Korrekturwert ermittelt wird, der alle Toleranzen bei der Regelung ausgleicht, so daß zum einen keine weiteren manuellen Justagevorgänge zur Eichung des Regelsystems erforderlich sind und zum anderen der Sollwert bzw. der daraus resultierende Regelwert trotz Justage nicht von seinem Grundeinstellwert verschoben wird, wodurch jederzeit der maximale erforderliche Stellweg der Stelleinrichtung zum Einstellen der lichtabstrahlenden Einrichtung des Kraftfahrzeugscheinwerfers zur Verfügung stehen.

Dadurch, daß nach Bestimmung des Korrekturwertes dieser als Konstante in einen überschreibbaren Speicher abgespeichert wird, ergibt sich eine besonders einfache und kostengünstige Anwendbarkeit des Verfahrens, das zudem sicherstellt, daß bei jeder Wartung bzw. Reparatur eine einfache Selbstjustage des Regelsystems im Sinne einer Eichung durchgeführt werden kann. Dies wird insbesondere dadurch gewährleistet, daß der Sollwert nach Bestimmung und Abspeicherung des Korrekturwertes freigegeben wird und in die Regelung einbezogen wird.

Dadurch, daß das Lagesignal durch Bildung der Differenz zweier vorn und hinten am Fahrzeug gemessener Niveausignale ermittelt wird, ergibt sich der Vorteil einer möglichst genauen Messung der Lage der Fahrzeugkarosserie zu der Fahrbahnoberfläche, ohne daß bei der Eichung zusätzliche Justagevorgänge notwendig werden.

In diesem Zusammenhang hat es sich als vorteilhaft erwiesen, bei der Ermittlung des Lagesignals aufgrund des Differenzwertes ein Diagnosesignal zu erzeugen, das bei unzulässigen Abweichungen von einem Sollwert ein Fehlersignal darstellt, weil somit auf einfache und kostengünstige Weise bei der Selbstjustage ermittelt wird, ob zum Beispiel ein Sensor zur Ermittlung der Lage der Fahrzeugkarosserie defekt ist oder bei der Selbstjustage eine unzulässige, die Regelung negativ beeinflussende Beladung des Kraftfahrzeuges vorliegt.

Dadurch, daß der Sollwert neben den durch fahrzeugspezifische und bauteileabhängige Toleranzen bedingten Korrekturwert durch einen fahrzeugtypabhängigen Offsetwert bestimmt ist, wird der Korrekturwert in der Regel in seiner Größe positiv verringert, da durch einen voreingestellten Offsetwert fahrzeugtypabhängige Toleranzen und Besonderheiten direkt ausgeglichen werden können.

Als besonders vorteilhaft hat sich erwiesen, daß die Eichung durch Vorgabe eines elektrischen Signals gestartet und selbsttätig durchgeführt wird, weil somit eine besonders einfache und kostengünstige Anwendbarkeit ohne einen tiefgreifenden Eingriff in das Regelsystem möglich ist.

Im folgenden wird ein Ausführungsbeispiel des erfindungsgemäßen Verfahrens erläutert.

Sowohl bei der Erstmontage als auch bei jeder notwendigen Wartung bzw. Reparatur wird oder ist das Kraftfahrzeug mit Scheinwerfern bestückt, die lichtabstrahlende Einrichtungen aufweisen, die über eine manuelle oder automatische Scheinwerfereinstelleinrichtung auf eine Grundeinstellung justiert werden.

Diese Grundeinstellung erfolgt in der Regel mit optischen Systemen, die als Scheinwerfereinstellsysteme ausgebildet sind und eine in einem vorgegebenen Abstand vor dem Kraftfahrzeug aufgestellte Meßwand simulieren. Über Einstelleinrichtungen am Kraftfahrzeugscheinwerfer wird mit Hilfe dieser optischen Einstelleinrichtungen eine Feinjustage durchgeführt, so daß die Leuchtweite bzw. Lichtverteilung den gesetzlichen Vorschriften entspricht. Bei der Erstmontage kommen dabei zunehmend automatische, computergesteuerte, optische Einstellvorrichtungen zur Anwendung.

Zur automatischen Regelung der Leuchtweite weisen die Kraftfahrzeugscheinwerfer Stelleinrichtungen auf, die die Lage der lichtabstrahlenden Einrichtungen verändern können. Diese können als pneumatische oder elektromotorische Stellelemente ausgebildet sein, die zum Beispiel einen Reflektor, eine Linse oder eine Blende in ihrer Lage beeinflussen. Dem gleichzusetzen ist zum Beispiel eine Lichtscheibe, die ähnlich einem LC-Display die Lichtabstrahlung beeinflußt.

Auch diese Stelleinrichtungen sind auf eine Grundeinstellung einstellbar, die einen bestmöglichen positiven und negativen Stellweg ermöglicht.

Die Stelleinrichtungen sind elektrisch mit elektronischen Regelsystemen verbunden, die aufgrund eines berechneten Regelwertes eine Stellbewegung der Stellelemente herbeiführen. Die Berechnung der Regelwerte erfolgt dabei im wesentlichen durch Vergleich von auf Meßwerten beruhenden Sollwerten, mit in Abhängigkeit von der Stellbewegung der Stelleinrichtungen gemessenen Istwerten der Einstellung der lichtabstrahlenden Einrichtungen.

Zur Ermittlung der Sollwerte weist das Kraftfahrzeug mindestens einen Sensor auf, der den Abstand der Fahrzeugkarosserie zur Straßenoberfläche mißt. Diese Sensoren können dabei zwischen der Achse und der Fahrzeugkarosserie angeordnet sein und nach unterschiedlichen elektrischen bzw. elektromagnetischen Verfahren arbeiten. Die Sensoren können aber z. B. auch als optische bzw. Ultraschallsensoren ausgebildet sein und direkt den Abstand zwischen Fahrzeugkarosserie und Fahrbahnoberfläche messen. Bei nur einem Sensor hat es sich als vorteilhaft erwiesen, diesen im hinteren Bereich des Kraftfahrzeugs anzuordnen, da die Relativbewegungen in diesem Bereich am größten sind. Die meisten Leuchtweitenregelsysteme verwenden jedoch zwei Sensoren, wobei einer im vorderen Bereich des Kraftfahrzeugs und einer im hinteren Bereich des Kraftfahrzeuges angeordnet ist. Beide Sensoren erzeugen der Lage der Kraftfahrzeugkarosserie zur Fahrbahnoberfläche entsprechende Niveausignale, die zum Beispiel durch einen Differenzbildner in Lagesignale bzw. in Sollwertsignale umgewandelt werden können.

Obwohl die Anwendung findenden Sensoren zur Bildung von Lagesignalen eine sehr hohe Meßgenauigkeit aufweisen, erzeugen diese Sensoren in dem gesamten Regelsystem durch die an den Anbauorten unvermeidbaren Toleranzen die fahrzeugtypisch und/ oder bauteiletypisch sein können, die größten auszugleichenden Fehler.

Bei dem Versuch, diese toleranzbedingten Fehlmessungen auszugleichen, hat sich als nachteilig erwiesen, daß entweder der Sollwert oder der Istwert des Regelsystems verändert werden muß, so daß ein zusätzlicher Eingriff in das Regelsystem vorgenommen werden muß und zusätzlich je nach vorzunehmender Korrektur der Stellweg der Stelleinrichtung in einer der Stellrichtungen stark eingeschränkt wird.

Um diese Nachteile zu vermeiden, werden bei der Eichung des Systems zur Regelung der Leuchtweite von Kraftfahrzeugscheinwerfern die folgenden Schritte durchgeführt:

1. Bei der Bestimmung des Sollwertes wird dem Lagewert, der dem Lagesignal bzw. der Differenz der Lagesignale entspricht, ein Korrekturwert hinzugefügt, entsprechend der Formel

Sollwert = Korrekturwert + Lagewert.

2. Aufgrund eines extern vorgegebenen Signals wird das Lagesignal abgeschaltet und steht somit zur Bildung eines Sollwertes nicht mehr zur Verfügung.

3. Bei abgeschaltetem Lagesignal wird

- der Sollwert auf einen der Grundeinstellung entsprechenden Wert festgesetzt,
- ein dem festgesetzten Sollwert entsprechender Regelwert erzeugt,
- eine manuelle oder automatische Feinjustage der lichtabgebenden Einrichtung entsprechend der vorgegebenen Leuchtweite auf die Grundeinstellung durchgeführt.

4. Bei Aufschaltung des Lagesignals zum Beispiel durch externe Vorgabe eines elektrischen Signals wird der Korrekturwert durch Bildung der Differenz zwischen dem Sollwert und dem Lagewert bestimmt.

5. Nach Bestimmung des Korrekturwertes wird dieser als Konstante in einem überschreibbaren Speicher abgespeichert.

6. Anschließend wird der Sollwert freigegeben und das Regelsystem mit veränderlichem So wert und fest vorgegebenem Korrekturwert gestartet.

Die Ab- und Aufschaltung des Lagesignals kann wie gesagt durch externe Vorgabe von elektrischen Signalen erfolgen. Diese elektrischen Signale können zum Beispiel durch Abziehen und Aufstecken eines Steckers, der die Lagesignale beinhaltet, gegeben werden oder aber zum Beispiel durch das Zuschalten eines Diagnosegerätes bzw. durch beliebige elektrische Schalter erzeugt werden.

Wird das Lagesignal durch Bildung der Differenz zweier vorn und hinten am Kraftfahrzeug gemessener Niveau-Signale ermittelt, so kann aufgrund eines Differenzwertes ein Diagnosesignal erzeugt werden, das bei unzulässigen Abweichungen von einem Sollwert ein Fehlersignal darstellt. In einem solchen Fall kann zum Beispiel einer der verwendeten Sensoren defekt sein oder zum Beispiel eine unzulässige Beladung während des Eichvorganges vorliegen. Die Ausgabe des Fehlersignals kann dabei zum Beispiel über ein angeschlossenes Diagnosegerät erfolgen oder aber zum Beispiel über eine optische und/oder akustische Einrichtung am Armaturenbrett erfolgen. Auch bei der Verwendung nur eines Sensors zur Bildung des Lagesignals kann bei Vorliegen eines zu großen Korrektursignals eine Fehlermeldung erzeugt werden.

Neben dem Korrekturwert der fahrzeugspezifische und bauteileabhängige Toleranzen korrigiert, kann bei der Bildung des Sollwertes auch ein fahrzeugtypabhängiger Offsetwert Anwendung finden. Dies erweist sich insbesondere bei der universellen Anwendung von Fahrzeugniveausensoren bei unterschiedlichen Fahrzeugtypen als vorteilhaft, da eine typbedingte Anpassung durch Vorgabe eines Offsetwertes bestmöglich ausgeglichen werden kann, ohne Nachteile für das Regelverfahren herbeizuführen.

**Patentansprüche**

1. Verfahren zur Eichung eines Systems zur Regelung der Leuchtweite von Kraftfahrzeugscheinwerfern, bei dem Sollwertsignale zur Regelung der Leuchtweite basierend auf der Messung von Lagesignalen, die der Lage der Fahrzeugkarosserie zu der Straßenoberfläche entsprechen, erzeugt werden, Istwertsignale, die die Einstellung der lichtabstrahlenden Einrichtung des mindestens einen Scheinwerfers wiedergeben, gemessen werden,

Regelwerte zur Ansteuerung einer Stelleinrichtung, die die Leuchtweite der lichtabstrahlenden Einrichtung ändert, durch Vergleichen der Sollwertsignale mit den Istwertsignalen, erzeugt werden
und ein Korrekturwertsignal zur Eichung des Systems auf eine Grundeinstellung, die einer vorgegebenen Leuchtweite entspricht, eingestellt wird,

wobei das Sollwertsignal gemäß der Formel

Sollwert = Korrekturwert + Lagewert

gebildet wird,
und wobei bei abgeschaltetem Lagesignal

- der Sollwert auf einen der Grundeinstellung entsprechenden Wert festgesetzt wird,
- ein dem festgesetzten Sollwert entsprechender Regelwert erzeugt wird,
- eine manuelle oder automatische Feinjustage der lichtabgebenden Einrichtung entsprechend der vorgegebenen Leuchtweite auf die Grundeinstellung durchgeführt wird,

und wobei bei Aufschaltung des Lagesignals der Korrekturwert durch Bildung der Differenz zwischen dem Sollwert und dem Lagewert bestimmt wird, und wobei nach Bestimmung des Korrekturwertes dieser als Konstante in einem überschreibbaren Speicher abgespeichert wird und wobei der Sollwert freigegeben wird und in die Regelung einbezogen wird.

2. Verfahren nach Anspruch 1, dadurch gekennzeichnet, daß das Lagesignal durch Bildung der Differenz zweier vorn und hinten am Fahrzeug gemessener Niveausignale ermittelt wird.

3. Verfahren nach Anspruch 2, dadurch gekennzeichnet, daß bei der Ermittlung des Lagesignals aufgrund des Differenzwertes ein Diagnosesignal erzeugt wird, das bei unzulässiger Abweichung von einem Sollwert ein Fehlersignal darstellt.

4. Verfahren nach mindestens einem der vorstehenden Ansprüche, dadurch gekennzeichnet, daß der Sollwert neben den durch fahrzeugspezifische und bauteileabhängige Toleranzen bedingten Korrekturwert durch einen fahrzeugtypabhängigen Offsetwert bestimmt ist.

5. Verfahren nach mindestens einem der vorstehenden Ansprüche, dadurch gekennzeichnet, daß die Eichung durch Vorgabe eines elektrischen Signals gestartet und selbsttätig durchgeführt wird.

**Claims**

1. A method for calibration of a system for the control of the headlamp range of motor vehicle headlamps, wherein the setpoint signals for control of the headlamp range - based on the measurement of position signals which correspond to the position of the vehicle body with respect to the road surface - are generated,

actual value signals which represent the setting of the light-emitting system of at least one headlamp are measured, control values for the activation of an actuating device, which changes the headlamp range of the light-emitting system, are generated through comparison of the setpoint signals with the actual value signals, and a correction value signal for calibration of the system is set to a basic setting which corresponds to a pre-determined headlamp range,

wherein the setpoint signal is formed according to the formula

setpoint = correction value + position value

and wherein upon disengagement of the position signal

- the setpoint is fixed at a value which corresponds to the basic setting
- a control value is generated which corresponds to the fixed setpoint
- a manual or automatic fine adjustment of the light-emitting system is carried out corresponding to the pre-determined headlamp range on the basic setting,

and wherein upon feedforward of the position signal the correction value is generated through the difference between the setpoint and the position value, and wherein following determination of the correction value this is stored as a constant in a memory which can be overwritten, and wherein the setpoint is released and is entered into the control process.

2. A method according to claim 1, characterised in that the position signal is established from the difference between 2 level signals measured at the front and rear of the vehicle.

3. A method according to claim 2, characterised in that upon establishment of the position signal on the basis of the difference value, a diagnostic signal is generated which represents a fault signal in the event of non-permissible deviation from a setpoint.

4. A method according to at least one of the above claims, characterised in that the setpoint is determined by the correction value resulting from vehicle-specific and component-dependent tolerances and by an offset value which is dependent on the vehicle type.

5. A method according to at least one of the above claims, characterised in that the calibration is initiated through the generation of an electrical signal and is carried out automatically.

## Revendications

1. Procédé de calibrage d'un système de réglage de la portée lumineuse de phares de véhicules, dans lequel on engendre des signaux de valeur de consigne pour régler la portée lumineuse, en se basant sur la mesure de signaux de position qui correspondent à la position de la carrosserie du véhicule par rapport à la surface de la chaussée, on mesure des signaux de valeur effective, ceux-ci reproduisant le positionnement du dispositif de rayonnement de lumière dudit au moins un phare, on engendre des valeurs de réglage destinées au pilotage d'un dispositif correcteur qui modifie la portée lumineuse du dispositif de rayonnement de lumière, en comparant les signaux de valeur de consigne aux signaux de valeur effective, et on établit un signal de valeur de correction pour calibrer le système sur un positionnement de base qui correspond à une portée lumineuse prédéterminée,
le signal de valeur de consigne étant formé suivant la formule

valeur de consigne = valeur de correction

+ valeur de position,

et, tandis que le signal de position est déconnecté :

- la valeur de consigne est fixée à une valeur correspondant au positionnement de base,
- une valeur de réglage est engendrée en fonction de la valeur de consigne fixée, et
- un ajustement fin manuel ou automatique du dispositif émetteur de lumière par rapport au positionnement de base est effectué en fonction de la portée lumineuse prédéterminée,

et, lorsque le signal de position est connecté, la valeur de correction est déterminée par formation de la différence entre la valeur de consigne et la valeur de position,
et après avoir déterminé la valeur de correction, celle-ci est mémorisée comme constante dans une mémoire réinscriptible,
et la valeur de consigne est libérée et intégrée dans le réglage.

2. Procédé selon la revendication 1, caractérisé en ce que le signal de position est déterminé en formant la différence de deux signaux de niveau mesurés à l'avant et à l'arrière sur le véhicule.

3. Procédé selon la revendication 2, caractérisé en ce que lors de la détermination du signal de position sur la base de la valeur de différence, on engendre un signal de diagnostic qui représente un signal d'erreur en cas de déviation inadmissible par rapport à une valeur de consigne.

4. Procédé selon au moins l'une quelconque des revendications précédentes, caractérisé en ce que la valeur de consigne est déterminée par une valeur de compensation dépendante du type de véhicule, en plus de la valeur de correction due à des tolérances spécifiques du véhicule et dépendantes des composants.

5. Procédé selon au moins l'une quelconque des revendications précédentes, caractérisé en ce que le calibrage est démarré en fournissant un signal électrique et en ce qu'il est effectué automatiquement.